# EUROPEAN PATENT APPLICATION

(11) **EP 0 979 855 A1**
(43) Date of publication of application: **16.02.2000**
(21) Application number: 98900185.4
(22) Date of filing: 08.01.1998
(51) Int. Cl.: C09K 5/04, F25B 1/00

(54) **METHOD FOR FILLING MIXED REFRIGERANT**

(30) Priority: 13.01.1997 JP 364597
(71) Applicant: DAIKIN INDUSTRIES, LTD., Kita-ku, Osaka 530 (JP)
(72) Inventor: TSUCHIYA, Tatsumi-Yodogawa Seisakusho, Settsu-shi,Osaka 566 (JP); IDE, Satoshi-Yodogawa Seisakusho, Settsu-shi,Osaka 566 (JP); SHIBANUMA, Takashi-Yodogawa Seisakusho, Settsu-shi,Osaka 566 (JP)
(74) Representative: Luderschmidt, Schüler & Partner GbR
(86) International application number: JP9800043
(87) International publication number: WO9830651

(57) **Abstract**

The present invention provides a method for filling a mixed refrigerant, characterized in that, in using as a refrigerant a non-azeotropic mixture comprising 23 to 27% by weight of difluoromethane, 13 to 17% by weight of pentafluoroethane and 58 to 62% by weight of 1,1,1,2-tetrafluoroethane, a mixture stored in a feeding container and comprising 25.5 to 26.0% by weight of difluoromethane, 15.5 to 16.0% by weight of pentafluoroethane and 58.0 to 59.0% by weight of 1,1,1,2-tetrafluoroethane is drawn out from liquid phase in the feeding container and then transferred and filled into a receiving container. According to the method of the present invention, the change in composition caused by transferring and filling the non-azeotropic mixed refrigerant of difluoromethane/pentafluoroethane/ 1,1,1,2-tetrafluoroethane, from the feeding container to air heating and cooling equipment and the like, can be kept within the permissible range of refrigerant performance.

## Description

### Technical Field

The present invention relates to a method for filling a non-azeotropic mixed refrigerant comprising 23 to 27% of difluoromethane, 13 to 17% of pentafluoroethane and 58 to 62% of 1,1,1,2-tetrafluoroethane to be used as a working fluid for vapor compression refrigeration cycle. In the present description, the symbol % represents percentage by weight.

### Background Art

The vapor compression type refrigeration cycle in which a fluid is cooled or heated by utilizing changes in the state of substances, namely evaporation and condensation, is widely used in heating and cooling equipment, refrigerators, hot water supply systems, and other equipments. For such vapor compression type refrigeration cycles, various working fluids including fluorocarbon refrigerants have been developed and put to use. Among them, HCFC22 (monochlorodifluoromethane) is widely used in heating and cooling equipment for air conditioning.

However, chlorofluorohydrocarbons were found to be responsible for the destruction of the ozone layer of the stratosphere when released into the atmosphere and eventually exert seriously adverse effects on the ecosystem including human on the earth. Then, a worldwide agreement calls for the restriction of use and in the future total abolition thereof. Under these circumstances, there is an urgent demand for developing a new refrigerant which has no or little potential to cause the problem of depleting the ozone layer.

As attempts to make up for insufficient performances of a single component refrigerant by the use of mixed refrigerants, many proposals for using non-azeotropic mixed refrigerants have recently been raised (e.g., Japanese Unexamined Patent Publication No. 79288/1989, Japanese Examined Patent Publication No. 55942/1994, and Japanese Unexamined Patent Publication No. 287688/1991).

In a phase change such as evaporation or condensation, a non-azeotropic mixture tends to readily allow evaporation of a component having a lower boiling point and condensation of a high-boiling component and thus undergo changes in composition. This tendency is more pronounced in the case of evaporation, namely phase change from liquid to vapor. The greater the difference in boiling point between constituents of the mixture is, the more remarkable said tendency is. Therefore, when such a non-azeotropic mixture is transferred from one container to another, it is a common practice to draw out the mixture from the liquid phase in order to avoid the phase change. However, even when the liquid phase is withdrawn, the resulting reduction in pressure or expansion of the gaseous phase causes evaporation of the lower-boiling component in the liquid phase. Where the difference is great, a change in composition amounting to about several percent may readily result.

However, even when the change in composition is of the order of several percent, a marked change in refrigerant performance occurs, with a decrease in refrigerating capacity or efficiency and, in addition, the safety features of the refrigerant, for example the combustibility, are greatly influenced.

In particular, when using as a refrigerant a non-azeotropic mixture comprising 25% of difluoromethane (HFC32), 15% of pentafluoroethane (HFC125) and 60% of 1,1,1,2-tetrafluoroethane (HFC134a), which is proposed as a substitute for HCFC22, the change in composition during transfer of the refrigerant from bomb and like feeding containers to heating and cooling equipment causes a serious problem, since the permissible range of composition is normally 23 to 27% of HFC32, 13 to 17% of HFC125 and 58 to 62% of HFC134a.

### Disclosure of the Invention

The primary object of the present invention is to provide a method for filling a non-azeotropic mixed refrigerant of difluoromethane/pentafluoroethane/1,1,1,2-tetrafluoroethane, wherein the change in composition during transferring and filling the refrigerant from a feeding container to heating and cooling equipment, etc. is kept within the permissible range of refrigerant performance.

The inventors conducted extensive research on a method for filling liquefied gases so as to solve the problems of the change in composition which occurs when a non-azeotropic mixture comprising three kinds of liquefied gases having different boiling points as stored in a sealed vessel is transferred and filled to another vessel from the liquid side of said mixture. As a result, the inventors found a method characterized in that in the case of employing a non-azeotropic mixture comprising 23 to 27% of difluoromethane, 13 to 17% of pentafluoroethane, and 58 to 62% of 1,1,1,2-tetrafluoroethane as a refrigerant, a change in composition caused by transfer-filling can be kept within the permissible range of refrigerant performance, by drawing out the mixture comprising 25.5 to 26.0% of difluoromethane, 15.5 to 16.0% of pentafluoroethane and 58.0 to 59.0% of 1,1,1,2-tetrafluoroethane from the liquid phase in the feeding container such as a bomb and then transferring and filling the mixture to another container.

Specifically, the present invention relates to a method for filling a mixed refrigerant, characterized in that, in using as a refrigerant a non-azeotropic mixture comprising 23 to 27% by weight of difluoromethane, 13 to 17% by weight of pentafluoroethane and 58 to 62% by weight of 1,1,1,2-tetrafluoroethane, a mixture stored in a feeding container and comprising 25.5 to 26.0% by weight of difluoro-methane, 15.5 to 16.0% by weight of pentafluoroethane and 58.0 to 59.0% by weight of 1,1,1,2-tetrafluoroethane is drawn out from liquid phase in the feeding container and then transferred and filled into a receiving container.

The refrigerant to which the present invention can be applied is a non-azeotropic mixed refrigerant comprising 23 to 27% of difluoromethane, 13 to 17% of pentafluoroethane, and 58 to 62% of 1,1,1,2-tetrafluoroethane.

Feeding containers to be used in the present invention are not specifically limited insofar as the container is a sealed container capable of storing a mixed refrigerant, and, for example, a bomb is exemplified.

In the present invention, it is necessary to draw out the mixture having the composition of 25.5 to 26.0% of difluoromethane, 15.5 to 16.0% of pentafluoroethane and 58.0 to 59.0% of 1,1,1,2-tetrafluoroethane from the liquid phase in the feeding container such as a bomb, and then transfer and fill the mixture into another container. This method can limit the change in composition caused by the transfer-filling within the permissible range.

As to the means for transfer-filling, any known method may be applied. For example, the method utilizing pressure difference, the method using pump, or the like can be employed for carrying out transfer-filling.

As equipments to which a mixed refrigerant is transferred and filled, any equipments which utilize vapor compression-type refrigeration cycle can be used. Said equipments include, but are not limited to, heating and cooling equipment, freezer, refrigerator, hot-water supplier, etc.

Although the method of the invention is applied to a non-azeotropic mixed refrigerant comprising 23 to 27% of difluoromethane, 13 to 17% of pentafluoroethane and 58 to 62% of 1,1,1,2-tetrafluoroethane, the technique of the invention may be also applied to the mixture different in the composition range, or other kinds of non-azeotropic mixtures comprising liquefied gases having different boiling points.

For example, a mixture of difluoromethane and 1,1,1,2-tetrafluoroethane, a mixture of pentafluoroethane, 1,1,1,1-trifluoroethane and 1,1,1,2-tetrafluoroethane, and the like mixtures are exemplified.

The method of filling a mixed refrigerant according to the present invention can limit the change in composition caused by transfer-filling of a non-azeotropic mixed refrigerant of HFC32/HFC125/HFC134a, used as a working fluid for vapor compression refrigeration cycle, within the permissible range. The method, therefore, prevents impaired refrigerant performance, increased inflammability, etc.

### Best Mode for Carrying out the Invention

The present invention is illustrated with reference to the following examples, but it is to be understood that the invention is not limited to the examples unless the scope of the invention is departed from.

### Comparative Example 1

A 10-liter container was filled with 9 kg of a non-azeotropic mixture of difluoromethane (HFC32), pentafluoroethane (HFC125) and 1,1,1,2-tetrafluoroethane (HFC134a) in a weight ration of 25.0/15.0/60.0. The container was placed into a thermostatic chamber, and the temperature was maintained at 10°C or 40°C.

The mixture from the liquid phase was then transferred and filled to another empty container by means of a pump. A portion of the gas during transfer-filling was collected through a sampling valve disposed in the intermediate position of the liquid side draw-out piping and the composition was analyzed by gas chromatography. The results are shown below in Table 1.

**Table 1**

| Transfer-filling Ratio and Analysis of Collected Gas Composition | | | | | | |
|---|---|---|---|---|---|---|
| | Composition (wt.%) | | | | | |
| Transfer-filling ratio (%) | 10°C | | | 40°C | | |
| | HFC32 | HFC125 | HFC134a | HFC32 | HFC12 | HFC134a |
| 10 | 24.8 | 14.9 | 60.3 | 24.8 | 14.9 | 60.3 |
| 20 | 24.8 | 14.9 | 60.3 | 24.7 | 14.9 | 60.4 |
| 30 | 24.8 | 14.9 | 60.3 | 24.6 | 14.8 | 60.6 |
| 40 | 24.7 | 14.9 | 60.4 | 24.5 | 14.8 | 60.7 |
| 50 | 24.7 | 14.8 | 60.5 | 24.4 | 14.7 | 60.9 |
| 60 | 24.6 | 14.8 | 60.6 | 24.3 | 14.7 | 61.1 |
| 70 | 24.5 | 14.7 | 60.8 | 24.1 | 14.6 | 61.3 |
| 80 | 24.4 | 14.7 | 60.9 | 23.8 | 14.5 | 61.7 |
| 85 | 24.3 | 14.7 | 61.0 | 23.6 | 14.4 | 62.0 |
| 90 | 24.1 | 14.6 | 61.3 | 23.2 | 14.2 | 62.6 |
| 95 | 23.7 | 14.4 | 61.9 | **** | **** | **** |

| | | | | | | |
|---|---|---|---|---|---|---|
| **** Liquid ran out. | | | | | | |

The results show that change in composition, when transferring and filling a non-azeotropic mixture of HFC32/HFC125/HFC134a (25.0/15.0/60.0 in ratios by weight), is greater at a higher temperature. At 40°C, the proportion of HFC134a exceeded the permissible range in the transfer-filling ratio of 85% and higher.

### Example 1

A 10-liter container was filled with a mixture (9 kg) of difluoromethane (HFC32), pentafluoroethane (HFC125), and 1,1,1,2-tetrafluoroethane (HFC134a), wherein the lower limit of HFC32 ratio was 25.5% and the upper limit thereof was 26.0% (central value: 25.75%); the lower limit of HFC125 ratio was 15.5% end the upper limit was 16.0% (central value: 15.75%); and the lower limit of HFC134a ratio was 58.0% and the upper limit thereof was 59.0% (central value: 58.5%). The container was placed into a thermostatic chamber and the temperature was maintained at 40°C. The temperature (40°C) was selected as the most unfavorable condition possible since the change in composition is likely to be greater at a higher temperature as shown in Comparative Example 1, and Japanese High Pressure Gas Control Law prohibits treating containers at 40°C and above.

Following the similar procedure as in Comparative Example 1, the mixture from the liquid phase was transferred and filled to another empty container by means of a pump, and a portion of the gas during transfer-filling was collected through a sampling valve disposed in the intermediate position of the liquid side draw-out piping and the composition was analyzed by gas chromatography. The results are shown below in Table 2.

**Table 2**

| Transfer Filling Ratio and Analysis of Collected Gas Composition according to the Method of the Present Invention | | | | | | |
|---|---|---|---|---|---|---|
| | Composition (wt.%) | | | | | |
| Transfer-filling ratio (%) | Upper Limit | | | Lower Limit | | |
| | HFC32 | HFC125 | HFC134a | HFC32 | HFC125 | HFC134a |
| 10 | 25.8 | 15.9 | 58.3 | 25.3 | 15.4 | 59.3 |
| 20 | 25.7 | 15.9 | 58.4 | 25.2 | 15.4 | 59.4 |
| 30 | 25.6 | 15.8 | 58.6 | 25.1 | 15.3 | 59.6 |
| 40 | 25.5 | 15.8 | 58.7 | 25.0 | 15.3 | 59.7 |
| 50 | 25.4 | 15.7 | 58.9 | 24.9 | 15.2 | 59.9 |
| 60 | 25.3 | 15.7 | 59.0 | 24.8 | 15.2 | 60.0 |
| 70 | 25.1 | 15.6 | 59.3 | 24.6 | 15.1 | 60.3 |
| 80 | 24.8 | 15.5 | 59.7 | 24.3 | 15.0 | 60.7 |
| 85 | 24.6 | 15.4 | 60.0 | 24.1 | 14.9 | 61.0 |
| 90 | 24.2 | 15.2 | 60.6 | 23.7 | 14.7 | 61.6 |
| 95 | **** | **** | **** | **** | **** | **** |

| | | | | | | |
|---|---|---|---|---|---|---|
| **** Liquid ran out. | | | | | | |

The above results show that the method for transfer-filling according to the present invention can limit the change in composition during transfer-filling within the permissible range.

## Claims

1. A method for filling a mixed refrigerant, characterized in that, in using as a refrigerant a non-azeotropic mixture comprising 23 to 27% by weight of difluoromethane, 13 to 17% by weight of pentafluoroethane and 58 to 62% by weight of 1,1,1,2-tetrafluoroethane, a mixture stored in a feeding container and comprising 25.5 to 26.0% by weight of difluoromethane, 15.5 to 16.0% by weight of pentafluoroethane and 58.0 to 59.0% by weight of 1,1,1,2-tetrafluoroethane is drawn out from liquid phase in the feeding container and then transferred and filled into a receiving container.
